**Europäisches Patentamt**

**European Patent Office**

**Office européen des brevets**

(19)

(11) Veröffentlichungsnummer : **0 465 419 A1**

(12)
# EUROPÄISCHE PATENTANMELDUNG

(21) Anmeldenummer : **91810490.2**

(22) Anmeldetag : **24.06.91**

(51) Int. Cl.⁵ : **F16L 47/02**

(30) Priorität : **05.07.90 CH 2235/90**

(43) Veröffentlichungstag der Anmeldung :
**08.01.92 Patentblatt 92/02**

(84) Benannte Vertragsstaaten :
**AT BE CH DE DK ES FR GB GR IT LI LU NL SE**

(71) Anmelder : **Geberit AG**
**Schachenstrasse 77**
**CH-8645 Jona (CH)**

(72) Erfinder : **Bossert, Rolf**
**Zelgenstrasse 30**
**CH-8810 Horgen (CH)**
Erfinder : **Etter, Bruno**
**Pestalozzistrasse**
**CH-8865 Bilten (CH)**

(74) Vertreter : **Groner, Manfred et al**
**Patentanwalts-Bureau Isler AG**
**Stampfenbachstrasse 48**
**CH-8006 Zürich (CH)**

(54) **Elektrisch heizbare Schweissmuffe.**

(57)   Die Schweissmuffe weist einen zylindischen Körper (30) aus thermoplastischem Kunststoff auf, in dem ein ebenfalls zylindrischer einsatz (35) eingesetzt ist. Der Einsatz (35) ist im Körper (30) axial fixiert und weist zwei Dichtungsbüchsen (36) auf, auf die vor dem Verschweissen jeweils ein aufgeweitetes Ende eines Verbundrohres (14) aufgeschoben wird. Jede Dichtungsbüchse (36) besitzt eine Ringnut (39) in die ein Dichtungsring (33) eingelegt ist, der die Stirnseite (38) des aufgeschobenen Rohres (14) zum Rohrinnern hin abdichtet. Nach Durchführung des Schweissvorganges ist der Körper (30) dicht mit einer thermoplastischen Aussenschicht (16) des Verbundrohres (14) verbunden.

EP 0 465 419 A1

Fig.1

Die erfindung betrifft eine elektrisch heizbare Schweissmuffe zum Verbinden von Rohren mit in der Muffe untergebrachter Heizdrahtwicklung. Im Stand der Technik ist eine Muffe dieser Art beispielsweise durch die CH-A-606895 oder EP-A-0093821 der Anmelderin bekannt geworden. Diese Muffe hat sich zum Verbinden von vollständig aus thermoplastischem Material bestehenden Rohren und Formstücken bewährt. Mit einer solchen Schweissmuffe können an sich auch Verbundrohre mit einer äusseren Schicht aus einem thermoplastischen Kunststoff verschweisst werden. Weisen diese Verbundrohre jedoch eine Zwischenschicht aus Aluminium auf, wie dies in der CH-A-655986 beschrieben ist, so besteht bei Abflussrohren die Schwierigkeit, dass diese durch aggressive Medien an den Stirnseiten angegriffen werden und die Rohrenden aufquellen. Diese Rohre mussten deshalb bisher mit aufwendigen Rohrkupplungen, beispielsweise gemäss der CH-A-664812, miteinander verbunden werden.

Der Erfindung liegt die Aufgabe zugrunde, eine Schweissmuffe der genannten Art zu schaffen, die sich insbesondere für Verbundrohre mit einer Innenschicht aus Metall eignet, und die trotzdem kostengünstig herstellbar ist. Die Aufgabe wird durch die erfindung gemäss Anspruch 1 gelöst. Die Erfindungsgemässe Schweissmuffe weist einen einsatz auf, der die Stirnseiten der Rohre nach innen abdichtet. Der Einsatz verhindert somit, dass aggressive Medien in der Rohrleitung an die Stirnseiten der Rohre gelangen können. Gegen aussen sind die Stirnseiten durch den aussenseitig aufzuschweissenden thermoplastischen Körper der Schweissmuffe geschützt. Mit der erfindungsgemässen Schweissmuffe kann somit eine dauerhafte und nicht lösbare Verbindung zwischen Verbundrohren geschaffen werden.

Nach einer Weiterbildung der Erfindung ist der Einsatz separat hergestellt und weist Mittel auf, mit denen er mittig in der Muffe axial fixierbar ist. Dies erlaubt eine sehr kostengünstige Herstellung, die dennoch eine einfachere Positionierung der Rohre in der Schweissmuffe vor dem Verschweissen erlaubt. Der in der Schweissmuffe fixierte Einsatz kann gleichzeitig ein Anschlag für die Positionierung der Rohre bilden.

Die axiale Fixierung des Einsatzes wird nach einer Weiterbildung der Erfindung durch eine Rastung erreicht. Dies kann durch eine mittige Ausnehmung in der Innenseite der Muffe und Rastzungen an einer Verdickung des Einsatzes kostengünstig und funktionssicher erreicht werden. Der Einsatz wird in den Durchgang der Schweissmuffe axial soweit eingeschoben, bis er in der genannten Ausnehmnung einrastet.

Nach einer Alternative ist der Einsatz in den thermoplastischen Körper der Schweissmuffe eingeschraubt. Die Schweissmuffe weist in diesem Fall in der Innenseite ein Gewinde auf und zwischen den Gewindegängen ist der Widerstandsheizdraht spiralformig eingesetzt.

Vorzugsweise ist der Einsatz temperaturbeständig. Als Werkstoff eignet sich insbesondere für den Einsatz Polyaethylen X. Dadurch wird vermieden, dass sich der einsatz beim Verschweissen deformiert.

Die erfindungsgemässe Schweissmuffe ist nach einer Weiterbildung der Erfindung für Kleinspannungen, beispielsweise 42 Volt, ausgelegt. Dies erlaubt eine einfachere Stromzuführung, da kein Berührungsschutz und keine Kontaktstifte erforderlich sind. Zur direkten Stromzuführung zur Heizdrahtwicklung genügen 2 Bohrungen in thermoplastischen Körper der Schweissmuffe.

Weitere vorteilhafte Merkmale ergeben sich aus der nachfolgenden Beschreibung.

Ausführungsbeispiele der Erfindung werden nachfolgend anhand der Zeichnungen näher erläutert. es zeigen:

Fig. 1 ein Schnitt durch eine erfindungsgemässe, an den Enden abgebrochene, Schweissmuffe und ein Teillängsschnitt durch ein zu verbindendes Rohrende,

Fig. 2 ein Schnitt durch eine Variante der erfindungsgemässen Schweissmuffe, mit zwei eingesetzten Rohrenden,

Fig. 3 schematisch ein Querschnitt durch eine Schweissmuffe und eine Vorrichtung zur Stromzuführung, und

Fig. 4 ein Längsschnitt durch eine Schweissmuffe, die ein Verbundrohr sowie ein Formstück verbindet.

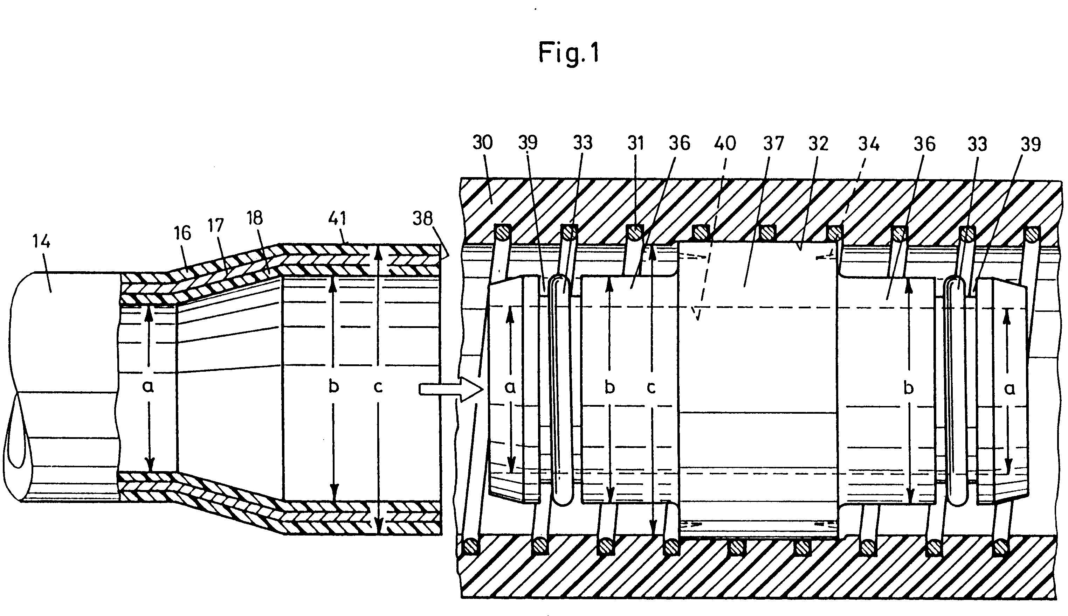

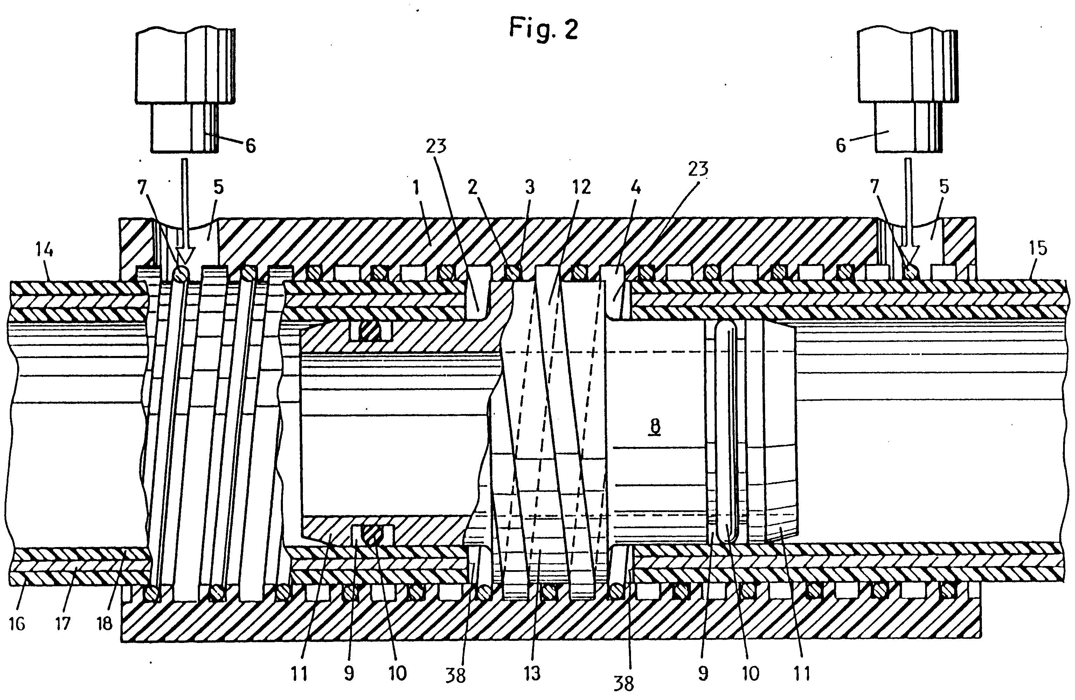

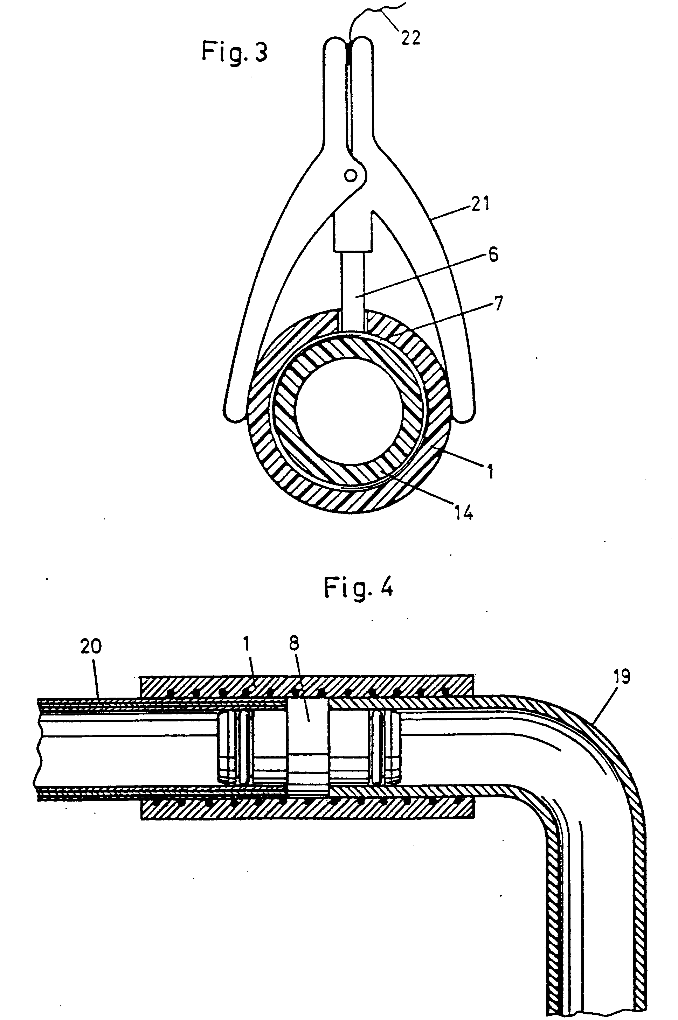

Die in Fig. 1 gezeigte elektrisch heizbare Schweissmuffe weist einen zylindrischen Körper 30 aus thermoplastischem Material auf, in dessen Innenseite in an sich bekannter Weise eine Heizdrahtwicklung 31 eingesetzt ist. Der Anschluss der Heizdrahtwindung 31 an eine Stromquelle ist weiter unten anhand der Fig. 2 und 3 näher erläutert.

In dem zylindrischen Körper 30 ist ein zylindrischer Einsatz 35 mit einer durchgehenden Längsbohrung 40 eingesetzt. Eine mittige Verdickung 37 des Einsatzes 35 ist mit federnden Zungen 34 in eine ringförmige Ausnehmung 32 auf der Innenseite des Körpers 30 eingerastet. Der Einsatz 35 kann somit in beiden Längsrichtungen der Schweissmuffe nicht verschoben werden.

Beidseitig der Verdickung 37 sind am Einsatz 35 zylindrische Dichtungsbüchsen 36 angeformt, auf welche jeweils ein Ende eines Verbundrohres 14 aufgeschoben werden kann. Damit der Einsatz 37 keine Verengung in der Rohrleitung bildet, sind die Rohrenden in Fig. 1 gezeigt von einem Innendurchmesser a auf einen Innendurchmesser b aufgeleitet. Der Innendurchmesser b entspricht dann dem Aussendurchmesser b der Dichtungsbüchse 36. In die Aussenseiten der Dichtungsbüchsen 36 sind Ringnuten 39 eingearbeitet, in die jeweils

3

ein Dichtungsring 33 eingelegt ist. Sind die Rohrenden auf die Dichtungsbüchsen 36 aufgeschoben, so dichten die Ringe 33 die Stirnseiten 38 der Rohre 14 nach innen ab. Durch die Rohrleitung strömendes Medium kann somit nicht zu den Stirnseiten 38 gelangen.

Die aufgeweiteten Rohrenden sind auf der Aussenseite 41 so bearbeitet, dass der Aussendurchmesser c dem Innendurchmesser c des thermoplastischen Körpers 30 entspricht.

Die Fig. 2 und 3 zeigen eine weitere Ausführung der erfindungsgemässen Schweissmuffe. Diese weist ebenfalls einen thermoplastischen zylindrischen Körper 1 auf, in den innenseitig eine Heizdrahtwicklung 2 eingelegt ist. Neben einem Gang 3 für die Heizdrahtwicklung 2 ist hier zudem ein parallel verlaufender Gewindegang 4 eingearbeitet, in den ein Einsatz 8 mit einem Aussengewinde 12 eingeschraubt ist. Wie bei der ersten Ausführung sind an einer Verdickung 13 Dichtungsbüchsen 11 mit Dichtungsringen 10 in Ringnuten 9 vorgesehen. Zur Stromzuführung weist der Körper 1 zwei Bohrungen 5 auf, in denen jeweils Bereiche 7 der Heizdrahtwindung 2 frei liegen. Der Anschluss an elektrische Leitungen 22 erfolgt mit zwei Kontaktzangen 21 von denen eine in Fig. 3 schematisch gezeigt ist. Diese besitzen jeweils einen Kontaktstift 6, der in eine Bohrung 5 eingesetzt und mit einem Bereich 7 in Kontakt gebracht wird. Bei dieser für eine Kleinspannung, beispielsweise 42 Volt, vorgesehenen Elektromuffe ist somit die Stromzuführung äusserst einfach. Bei der in Fig. 1 gezeigten Ausführung der Elektromuffe sind eben solche Bohrungen für die Stromzuführung über Kontaktzangen vorgesehen.

Vor dem Verschweissen kann zwischen den Stirnflächen 38 der Rohre 14 und 15 und der Verdickung 13 des Einsatzes 8 jeweils ein ringförmiger Zwischenraum 23 bestehen, wie dies in Fig. 2 dargestellt ist. Diese Zwischenräume 23 werden während des Schweissvorganges durch thermoplastisches Material aus dem Körper 1 ganz oder teilweise aufgefüllt und dadurch die Stirnflächen 38 mit einer thermoplastischen Kunststoffschicht versiegelt. Dies bildet ein weiterer Schutz der Stirnflächen 38 gegen äussere Einflüsse.

Die Schweissmuffe eignet sich sowohl zum Verbinden von zwei Verbundrohren 14 und 15 als auch zum Verbinden eines Verbundrohres 20 mit einem Formstück 19, wie dies in Fig.4 schematisch dargestellt ist. Auch hier werden die Enden des Verbundrohres 20 und des Formstückes 19 in der Regel aufgeweitet und kalibriert.

Der thermoplastische Körper 1 bzw. 30 der Schweissmuffe kann in bekannter Weise eine latente Spannung aufweisen, die während des Schweissvorganges zu einer Schrumpfung und zu einem radialen Schweissdruck führt. Eine solche Schrumpfung ist dann erforderlich, wenn die zu verschweissenden Rohre 14 und 15 vergleichsweise grosse Toleranzen im Aussendurchmesser aufweisen. Werden hingegen die Rohre 14 und 15 an den Enden aussenseitig so bearbeitet, dass sie weitgehend ohne radiales Spiel in die Schweissmuffe eingeschoben werden können, so ist eine solche Schrumpfung nicht erforderlich. Das letztere gilt insbesondere für Verbundrohre mit einem vergleichsweise kleinen Aussendurchmesser von beispielsweise 16 mm. Das aufgeweitete Ende weist hier dann einen Aussendurchmesser von etwa 18 mm auf. Entsprechend ist dann der Innendurchmesser der Elektromuffe ebenfalls 18 mm. Solche Verbundrohre weisen eine Innenschicht 18 aus, beispielsweise einem Polyamid, eine Mittelschicht 17 aus Aluminium und eine Aussenschicht 16 aus einem thermoplastischen Kunststoff sowie hier nicht gezeigte Zwischenschichten auf. Im verschweissten Zustand ist die Aussenschicht 16 dicht und unlösbar mit dem thermoplastischen Körper 1 bzw. 30 verbunden. Die Stirnflächen 38 sind somit von aussen und von innen gegen Angriffe aggressiver Medien dauerhaft geschützt.

## Patentansprüche

1. Elektrisch heizbare Schweissmuffe aus thermoplastischem Material zum Verbinden von Rohren (14,15,20) bzw. von Stücken (19) mit in der Muffe untergebrachter Heizdrahtwicklung (2,31), gekennzeichnet durch einen die Stirnseiten (38) der Rohre (14,15,20) nach innen abdichtenden Einsatz (8,35).

2. Schweissmuffe nach Anspruch 1, dadurch gekennzeichnet, dass der Einsatz (8,35) separat hergestellt ist und Mittel (12,34) aufweist, mit denen der Einsatz mittig und axial im Durchgang der Muffe fixiert ist.

3. Schweissmuffe nach Anspruch 2, dadurch gekennzeichnet, dass der Einsatz (8,35) durch Rastmittel (34) fixiert ist.

4. Schweissmuffe nach Anspruch 2, dadurch gekennzeichnet, dass der Einsatz (8) eingeschraubt ist.

5. Schweissmuffe nach Anspruch 3, dadurch gekennzeichnet, dass der Einsatz (35) federnde Rastzungen (34) aufweist, die in eine ringförmige Ausnehmung (32) des Muffenkörpers (30) eingerastet sind.

6. Schweissmuffe nach einem der Ansprüche 1 bis 5, dadurch gekennzeichnet, dass der Einsatz (8,35) aus einem temperaturbeständigen Werkstoff hergestellt ist.

7. Schweissmuffe nach Anspruch 6, dadurch gekennzeichnet, dass der Einsatz (8,35) aus Polyaethylen X hergestellt ist.

8. Schweissmuffe nach einem der Ansprüche 1 bis 7, dadurch gekennzeichnet, dass der Muffenkörper (1,30) zwei Bohrungen (5) aufweist, durch die eine direkte Stromzuführung zur Heizdrahtwicklung (7) möglich ist.

9. Schweissmuffe nach einem der Ansprüche 1 bis 8, dadurch gekennzeichnet, dass der Einsatz (8,35) zwei angeformte Dichtungsbüchsen (36,11) mit in Nuten (9,39) eingelegten Dichtungsringen (10,33) aufweist.

Fig.1

EP 0 465 419 A1

Fig. 2

Fig. 3

Fig. 4

EP 0 465 419 A1

Europäisches
Patentamt

**EUROPÄISCHER RECHERCHENBERICHT**

Nummer der Anmeldung

EP    91 81 0490

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4718698 (HILL)<br>* Zusammenfassung; Figur 2 * | 1 | F16L47/02 |
| A | | 2, 3, 7, 8 | |
| A | US-A-3768841 (BYRNE ET AL.)<br>* Zusammenfassung; Figur 4 *<br>--- | 1-3 | |
| A | EP-A-0306554 (HEWING GMBH & CO.)<br>* Spalte 3, Zeilen 31 - 51; Figur 1 *<br>--- | 1, 6, 9 | |
| A | EP-A-0337037 (SOCIETE ALPHACAN)<br>* Zusammenfassung; Figur 1 *<br>--- | 1 | |
| A | DE-A-2556618 (SEKISUI KAGAKU KOGYO)<br>----- | | |

**RECHERCHIERTE SACHGEBIETE (Int. Cl.5 )**

F16L
B29C

Der vorliegende Recherchenbericht wurde für alle Patentansprüche erstellt

| Recherchenort | Abschlußdatum der Recherche | Prüfer |
|---|---|---|
| BERLIN | 30 AUGUST 1991 | SCHAEFFLER C.A.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument